# FASCICULE DE BREVET EUROPEEN

(11) **EP 0 991 562 B1**
(45) Date de publication et mention de la délivrance du brevet: **31.10.2001**
(21) Numéro de dépôt: 98933712.6
(22) Date de dépôt: 24.06.1998
(51) Int. Cl.: B63B 1/12

(54) **MONOCOQUE A STABILISATEURS ARRIERE POUR NAVIRE A GRANDE VITESSE**
SCHNELLES EINRUMPFSCHIFF MIT HECKSTABILISATOREN
MONOHULL WITH REAR STABILISERS FOR HIGH SPEED SHIP

(30) Priorité: 25.06.1997 FR 9708304
(43) Date de publication de la demande: 12.04.2000
(73) Titulaire: Largillier, Bernard, 13014 Marseille (FR); Vaton, Gilles, 13007 Marseille (FR)
(72) Inventeur: VATON, Gilles, F-13007 Marseille (FR)
(74) Mandataire: Domange, Maxime
(86) Numéro de dépôt international: FR9801340
(87) Numéro de publication internationale: WO9900291

(56) Documents cités:
- EP-A- 0 495 722
- DE-B- 1 039 868
- FR-A- 2 460 250
- GB-A- 2 305 400
- "Trimarans-the shape of the future?" SHIP AND BOAT INTERNATIONAL,juin 1996, pages 17-21, XP000589589 LONDON,GB

## Description

La présente invention a pour objet des monocoques à stabilisateurs arrière pour navire à grande vitesse.

Le secteur technique de l'invention est le domaine de la construction navale et plus particulièrement de la fabrication des coques de navires.

L'application principale de l'invention est la construction de navires à grande vitesse, c'est-à-dire supérieure à 38 noeuds et même jusqu'à 54 noeuds et au delà, de longueur moyenne de plus de 50 m et capable d'embarquer en particulier des passagers et des véhicules pour des utilisations aussi bien civiles que militaires.

En effet depuis des millénaires, les constructions de bateaux ont assez bien progressé dans la partie motorisation des navires pour augmenter leur vitesse et leur rayon d'action : partant de l'énergie musculaire du temps des anciens égyptiens à l'énergie éolienne, puis de la vapeur à l'essence et récemment à l'énergie atomique. Mais durant cette révolution dans le domaine de la motorisation, les coques n'ont pratiquement pas évolué : le monocoque a toujours prévalu par sa simplicité, sa légèreté et sa portance tant statique que dynamique même si sa stabilité, tout au moins en terme de confort, n'est pas parfaite.

Cependant depuis quelques années de nombreuses nouvelles conceptions sont étudiées et développées pour détrôner le monocoque avec pour objectif une plus grande vitesse et une meilleure stabilité, et cela tant à la demande des militaires que des armateurs ; ces derniers veulent en effet devenir beaucoup plus compétitifs que les transporteurs aériens en envisageant de diminuer d'au moins de moitié le temps alloué à une traversée transocéanique tout en étant capable de transporter bien sûr beaucoup plus de passagers que dans un avion gros porteur. Il est évident cependant que beaucoup de très grands bateaux vont rester en toute vraisemblance des monocoques pendant encore longtemps, spécialement dans les cas où ni la stabilité, ni la grande vitesse ne sont considérées comme des atouts majeurs tels que par exemple dans les transports pétroliers.

Pour obtenir des grandes vitesses, soit donc supérieures à 30 noeuds, on a vu ainsi se développer différents types de coques utilisant pour certaines uniquement la sustentation hydrostatique comme les monocoques mais en multipliant le nombre de coques tels que les catamarans et les trimarans en particulier ; pour d'autres il est utilisé la sustentation hydrodynamique grâce à des ailes immergées qui font décoller la coque portante à partir d'une certaine vitesse ; d'autres principes ont été développés utilisant en particulier la sustentation aérostatique tels que les navires à coussins d'air.

La présente invention utilise en fait l'ensemble de ces principes de sustentation à partir d'une conception de type trimaran ; les développements et surtout les réalisations des navires à trois coques sont connus à ce jour essentiellement dans le domaine de la plaisance et en particulier de la voile pour battre justement des records de vitesse cependant dans ce type d'utilisation, le flotteur situé au vent de la coque centrale n'a pratiquement aucune fonction en navigation, le bateau s'appuyant alors sur le flotteur central et le flotteur latéral situé sous le vent. Différentes conceptions de coque trimaran ont été également développées pour battre des records de vitesse en propulsion mécanique mais sans souci de transport de marchandises ou de passagers tel que le navire décrit dans la demande de brevet australienne AU 521518 : il s'agit d'une sorte de trimaran comportant trois hydroskis permettant son déplacement sur trois surfaces d'appui disposées en triangle, l'une à l'avant et les deux autres à l'arrière et permettant de faire décoller complètement la coque, ce qui n'est pas extrapolable pour un navire de transport lourd tel que de passagers ou de véhicules.

Dans ce domaine des transports commerciaux assez peu de projets ont pu être développés même si on relève les demandes de brevet FR 2671775 et 2675460 du même déposant, Société Nouvelle des Ateliers et Chantiers du Havre, décrivant des navires à coques multiples mais dont aucun exemple n'a été réalisé à ce jour pour sans doute des problèmes essentiellement de stabilité et de coût : il s'agit en effet de coques dont d'une part les supers structures et le flotteur central sont assez conventionnels, avec certes des flotteurs latéraux assez fins, mais ne pouvant atteindre que 40 noeuds maximum de vitesse ; de plus ces coques sont assez lourdes et les parties utilisables des supers structures ainsi que le centre de gravité de l'ensemble sont placés très haut au dessus de l'eau.

De toute façon, actuellement à moins de débauche de puissance de propulsion qui rend alors le navire inconfortable par ses vibrations et n'est pas économiquement rentable, aucun navire dit à grande vitesse ne dépasse, en navigation normale, les 35 noeuds, car en fait celle-ci est limitée par la résistance hydrodynamique à l'avancement qui croît comme le cube de la vitesse pour justement les grandes vitesses au-dessus de 30 à 35 noeuds.

Le problème posé est donc de pouvoir réaliser des navires capables de transporter des passagers et/ou du fret tels qu'essentiellement des véhicules, d'au moins 50 m de long, aptes à naviguer à grande vitesse au delà de 40 noeuds et même de 50/60 noeuds, quelque soient les conditions météorologiques et en gardant une assez bonne stabilité tant en roulis, qu'en tangage pour d'une part, un confort de navigation en particulier pour les passagers et d'autre part, ne pas trop solliciter les structures de coques qui doivent être simples à fabriquer, rigides et résistantes.

Une solution au problème posé est une coque de navire comportant un flotteur principal central et deux flotteurs latéraux de longueur plus courte, situés vers l'arrière du flotteur central, reliés à celui-ci par des bras de liaison et comportant des ailerons immergés ; les carènes des trois flotteurs sont toujours en partie immergée et donc à considérer, quelles que soient la vitesse et les conditions météorologiques comme formant toujours une coque à déplacement mais, suivant l'invention, de conception entièrement nouvelle : le coefficient de finesse des trois carènes est compris entre 0,25 et 0,35 avec un rapport de leur longueur sur leur largueur compris entre 12 et 20 et un rapport de longueur de la coque centrale sur la longueur des carènes latérales entre 2,5 et 4,5.

Cette conception de base, telle que précisée ci-après, avec une coque centrale à très grand allongement, offre une résistance à l'avancement très faible et un comportement efficace sur les houles courtes telles qu'on les rencontre dans les mers fermées ou semi-fermées telle que la Méditerranée ou la Manche. La stabilité transversale est assurée par les flotteurs arrières qui peuvent donner à la coque suivant l'invention une qualification de trimaran alors qu'il s'agit en fait plutôt d'un "pseudo trimaran" ; de tels flotteurs arrières, tels que définis par leurs caractéristiques précisées ci-après, confèrent au navire, contrairement au catamaran, un comportement remarquable en raison de la grande période de roulis qu'ils engendrent ; le roulis est par ailleurs maîtrisé par l'efficacité des ailerons stabilisateurs, qui de préférence, sont mobiles et orientables en fonctionnement alterné de façon à ce qu'il soit toujours en incidence positive, donnant une portance toujours orientée vers le haut. Ces ailerons stabilisateurs immergés ou foil apportent de plus un effet de sustentation hydrodynamique permettant de concourir au déjaugeage de la partie arrière de la coque centrale à partir d'une certaine vitesse.

De plus pour assurer une bonne stabilité transversale pour une largeur hors tout de la coque modérée, tout en conservant une traînée minimale ainsi qu'une structure monobloc à cet ensemble pseudo trimaran, ces petits flotteurs arrières, légèrement immergés, ont un élancement de leur étrave assez important avec une forme en V donnant une entrée d'eau très fine, et une légère immersion arrière permettant un mouvement très doux et quasiautostable avec la vitesse.

En ce qui concerne le tangage celui-ci est minimisé par une forme également en V étroit de l'étrave du flotteur central, donnant une finesse d'entrée dans l'eau et peu d'élancement, qui concourent à qualifier la coque de "perce-vague" ; la position arrière des flotteurs tend également à casser rapidement toute amorce de tangage dans la houle.

Pour compléter cette conception de base qui est précisée dans la description des figures ci-après, et répondre au problème posé, les bras de liaison suivant l'invention sont carénés en forme d'ailes, créant deux tuyères à effet de sol entre les surfaces latérales intérieures émergées du flotteur central et des flotteurs latéraux, et la surface liquide, sur laquelle se déplace ladite coque trimaran : ces ailes des bras de liaison sont de relativement faible envergure mais de corde importante se déplaçant à une hauteur comprise entre un demi et un quart de la corde moyenne au dessus de l'eau. On obtient ainsi une sustentation aérodynamique due à la pression statique obtenue par ralentissement de l'air au passage dans ces sortes de tuyères constituées par le dessous des ailes des bras de liaison rejoignant les flotteurs à la coque centrale, et la surface de l'eau ; cette pression statique augmente avec la vitesse ; des estimations par calculs ont permis d'évaluer que pour une surface portante de chaque aile de ces bras de liaison de l'ordre de 220 m², à une vitesse entre 40 et 50 noeuds, on obtient par cet effet de sol une déportance de l'ordre de 50 à 60 tonnes, à l'aide de profil cambré de ces bras en forme d'ailes de type connu Gottingen tel que celui référencé G652 (cambré). La combinaison de cette "hypersustentation" avec la déportance obtenue par les ailerons stabilisateurs immergés qui sont également appelés dans le présent domaine technique maritime des "foils", et solidaires des flotteurs latéraux, qui pour une surface de l'ordre de 6 m² chacun a une vitesse comprise entre 40 et 50 noeuds, donnent une déportance d'environ 60 tonnes, permet un allégement total obtenu de l'ordre de 20 % de la masse d'un navire ayant un déplacement de 550 tonnes, correspondant aux indications de surface ci-dessus, c'est-à-dire ayant une longueur de l'ordre de 100 m et considéré à mi charge.

De plus, d'autres caractéristiques suivant l'invention complètent celles présentées ci-dessus pour répondre au problème posé et apportent des avantages complémentaires, à savoir :
- pour obtenir une poussée suffisante permettant d'atteindre de telles vitesses d'au moins 40 à 50 noeuds, la propulsion est assurée par au moins un jet d'eau et de préférence deux , sortant de la partie arrière du flotteur central, complété de préférence par un autre propulseur par jet d'eau ou "hydrojet" situé à l'arrière de chaque flotteur latéral, soit donc un total préférentiel de quatre ; les tuyères d'éjection de ces jets d'eau sont de préférence orientables vers le haut et vers le bas de l'ordre de 12 ° par rapport à l'horizontale, complétant les effets ci-dessus des ailerons immergés ou "foils", des formes de carène et des bras de liaison afin de réduire les mouvements de tangage et de roulis : on asservit pour cela les mouvements desdites tuyères et desdits ailerons ou foils avec un pilotage lié à une centrale inertielle ;
- pour assurer et maintenir de telles vitesses élevées, du fait de la traînée importante des parties aériennes à ces vitesses de plus de 40 noeuds, l'aérodynamisme des éléments aériens, c'est-à-dire des super structures ou oeuvres mortes de la coque, est optimum, en donnant entre autres, des formes arrondies aux extrémités avant des parties de coque concernée comme pour un fuselage d'avion ; l'ensemble de ces oeuvres mortes n'a aucune protubérance, ni arête pour obtenir un coefficient de traînée minimal face au vent. De plus le flotteur central comporte un empennage vertical aérien arrière, doté d'un volet mobile et constituant un stabilisateur naturel, en fournissant un léger appui du coté opposé au vent apparent ; un équilibre s'établit également entre la portance obtenue par cet aileron arrière, dont on pourra contrôler l'appui grâce à son volet mobile de braquage et celle de la surface de la muraille avant du flotteur central ;
- afin de donner au navire, à une vitesse supérieure à 45 noeuds, une assiette horizontale et une longueur de flottaison maximale assurant une consommation d'énergie minimale, la coque du navire suivant l'invention a, à l'arrêt, une assiette légèrement négative correspondant à un léger piquage de son étrave. On notera que les navires classiques et connus à déplacement s'enfoncent toujours de l'arrière quand on veut dépasser les 45 noeuds de vitesse : ainsi en se cabrant, ils ne peuvent pas en fait dépasser cette vitesse de 45 noeuds. Dans la présente invention la combinaison des appuis des flotteurs arrières latéraux, des ailerons immergés et des ailes portantes des bras support empêche un tel enfoncement et cabrage, concourt même donc à soulever l'arrière et maintient en conséquence le navire horizontal dans ces lignes même à 45 noeuds lui permettant alors de dépasser cette vitesse.

Le résultat est une nouvelle conception de monocoque à stabilisateurs arrières, ou dite coque pseudotrimaran de navire à grande vitesse permettant de répondre au problème posé avec les divers avantages évoqués ci-dessus. En fait, la solution décrite dans la présente invention est, pour atteindre les vitesses indiquées et dépasser les 30 à 35 noeuds des navires actuels en navigation normale, de diminuer une partie de la résistance hydrodynamique et ainsi de permettre des vitesses de l'ordre de 50 à 60 noeuds (100 à 115 km/h) avec des puissances encore raisonnables (35.000 chevaux pour un navire suivant les dimensions indiquées ci-après). D'une certaine manière, à partir de 35 noeuds environ, grâce à la configuration particulière de la coque suivant l'invention, une auto-stabilité se met en place et permet de gagner 15 à 25 noeuds environ avec relativement peu de puissance supplémentaire ; en tout état de cause, la traînée de la coque suivant l'invention, n'augmente pas à ces vitesses au-dessus de 30/35 noeuds comme le cube de la vitesse.

De plus, la coque pseudo trimaran de la présente invention permet d'avoir une hauteur totale sur l'eau, tout en ayant une habitabilité importante, assez faible (telle que l'on peut le remarquer sur les figures jointes), comparativement aux coques trimaran connues à ce jour : en effet, pour une longueur de coque centrale de 100 m et plus, la hauteur hors tout sur l'eau de celle-ci est au maximum de 10 m, avec une hauteur des bras de liaison au dessus de l'eau entre 3 et 6 m et une largeur hors tout par exemple de 30 à 35 m.

Une telle coque permet de transporter des passagers dans un confort que l'on peut considérer comme équivalent à celui d'un avion, et des véhicules et/ou des containers chargés dans la soute du seul flotteur central par un accès arrière fermé par toute porte de conception connue et qui peut être très simple. Il est a noté en effet que seul le volume émergé du flotteur central est aménagé pour le transport des passagers et du fret, le reste des volumes étant constitués de compartiments étanches, dont la plupart sont remplis de mousse à cellules fermées garantissant l'insubmersibilité.

De plus la structure du flotteur central peut être surdimensionnée et grâce à une forme biconique assure à la poutre navire une rigidité importante de sorte qu'il n'y a pas de contrainte alternée, ce qui permet d'envisager au moins 25 ans de service : en effet la forme biconique est caractérisée par une section en coupe plus importante au milieu longitudinal du flotteur qu'en ses extrémités avant et arrière ; l'épaisseur des bordés de coque peut être, sans trop pénaliser le déplacement total, de l'ordre du triple des prescriptions des organismes de classification, ce qui est nécessaire du fait des grandes vitesses atteintes et qui est possible grâce au concept particulier du navire suivant l'invention réduisant les surfaces des bordés de la carène.

Malgré son aspect assez particulier et très innovant, la construction de ce navire peut être réalisée d'une manière très simple voir même rustique avec une structure mixte et des bordés faciles à former. Pour des réalisations de navires de 50 à 115 m le matériau choisi pourra être de l'aluminium et pour les tailles de 120 à 150 m l'acier ou mixte.

On pourrait développer d'autres caractéristiques et avantages de la présente invention mais ceux cités ci-dessus en montrent déjà suffisamment pour en prouver la nouveauté et l'intérêt.

La description et les figures ci-après représentent un exemple de réalisation de l'invention mais n'ont aucun caractère limitatif : d'autres réalisations sont possibles dans le cadre de la portée de l'étendue de cette invention, en particulier en changeant certains détails de forme des super structures et la disposition des aménagements intérieurs.

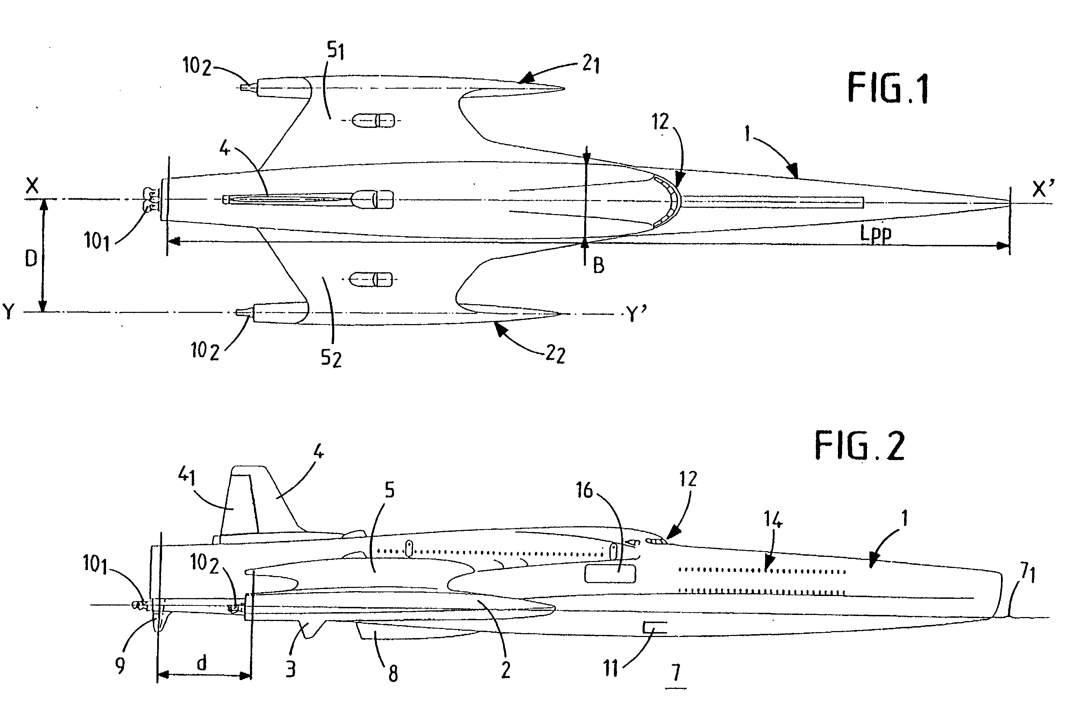

La figure 1 est une vue du dessus d'une coque trimaran suivant l'invention.

La figure 2 est une vue latérale de profil de la coque de la figure 1.

La figure 3 est une vue arrière de la coque de la figure 1.

Les figures 4a et 4b sont des vues en demi coupe suivant IVa et

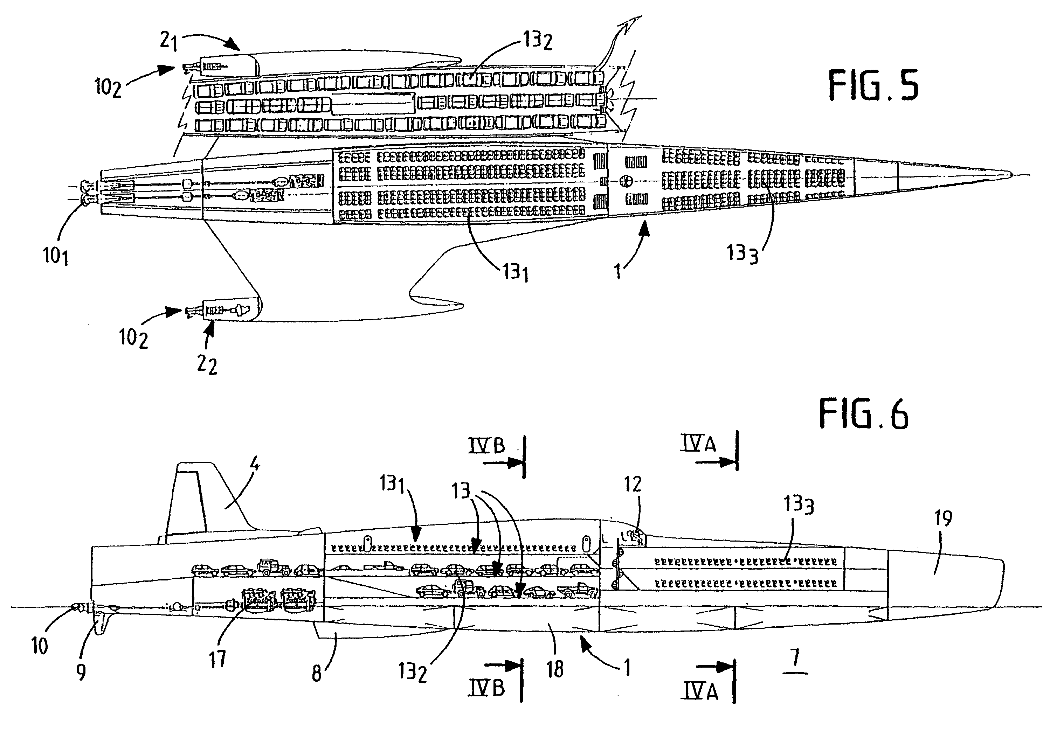

IVb de la figure 6.

La figure 5 est une vue de dessus de trois étages de pont référencé sur la figure 6.

La figure 6 est une vue en coupe longitudinale médiane suivant VI,VI' du flotteur central.

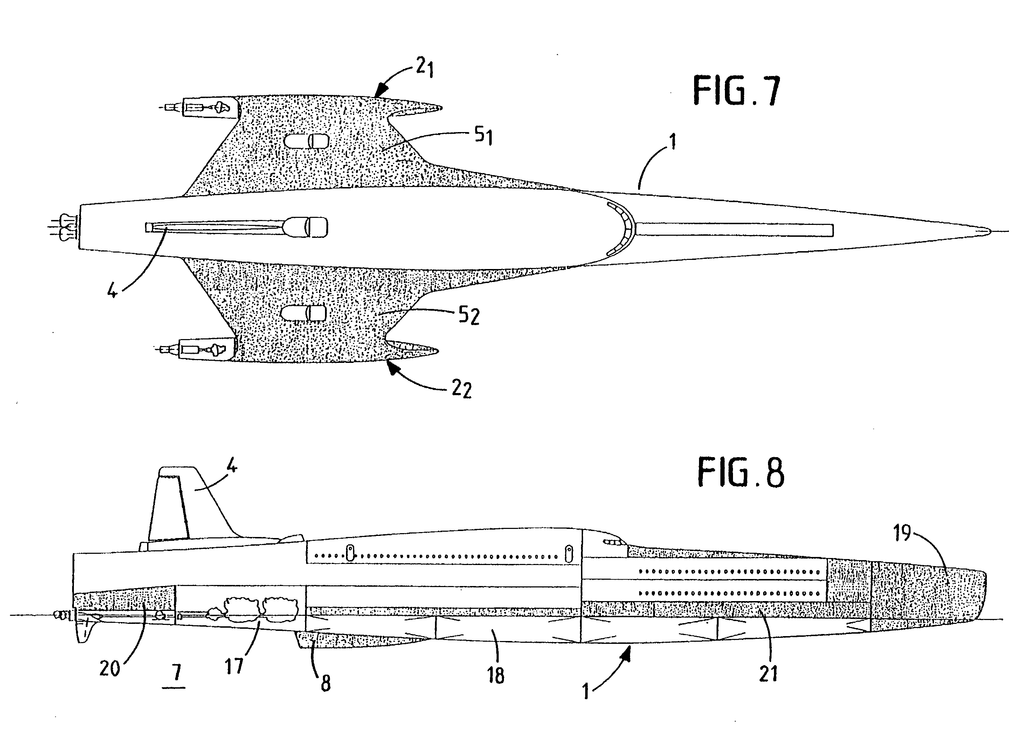

La figure 7 est une vue en coupe horizontale partielle des bras de liaison entre les différents flotteurs.

La figure 8 est une vue en coupe partielle longitudinale du flotteur central suivant l'invention montrant les différents espaces de réserve de flottabilité.

L'ensemble de ces figures représente donc une coque pseudo trimaran de navire à grande vitesse comportant d'une manière connue un flotteur central 1 et deux flotteurs latéraux 2 de longueur plus courte situés vers l'arrière du flotteur central 1 et reliés à celui-ci par des bras de liaison 5 ; les carènes des trois flotteurs 1, 2 sont toujours immergés quelque soit la vitesse et les conditions météorologiques et assurent une navigation en maintenant les ponts de transport de passagers et/ou de fret quasi horizontaux ; pour cela et entre autres les carènes desdits flotteurs latéraux 2 comportent des ailerons immergés, ou "foils", orientables 3 d'un angle alpha égal à 45° environ en position médiane par rapport au plan médian vertical YY' de chaque flotteur 2 et orientés vers l'intérieur de la coque vers le flotteur central 1 : ils sont de préférence articulés sous chaque flotteur 2 latéraux et peuvent s'incliner au moins entre 40 et 50°; ces ailerons stabilisateurs ou "foils" peuvent être par exemple d'un profil dit Vaton, de type de ceux définis par ce dernier et tels que fabriqués sur le bateau Charles HEIDSIEK IV en 1994/85.

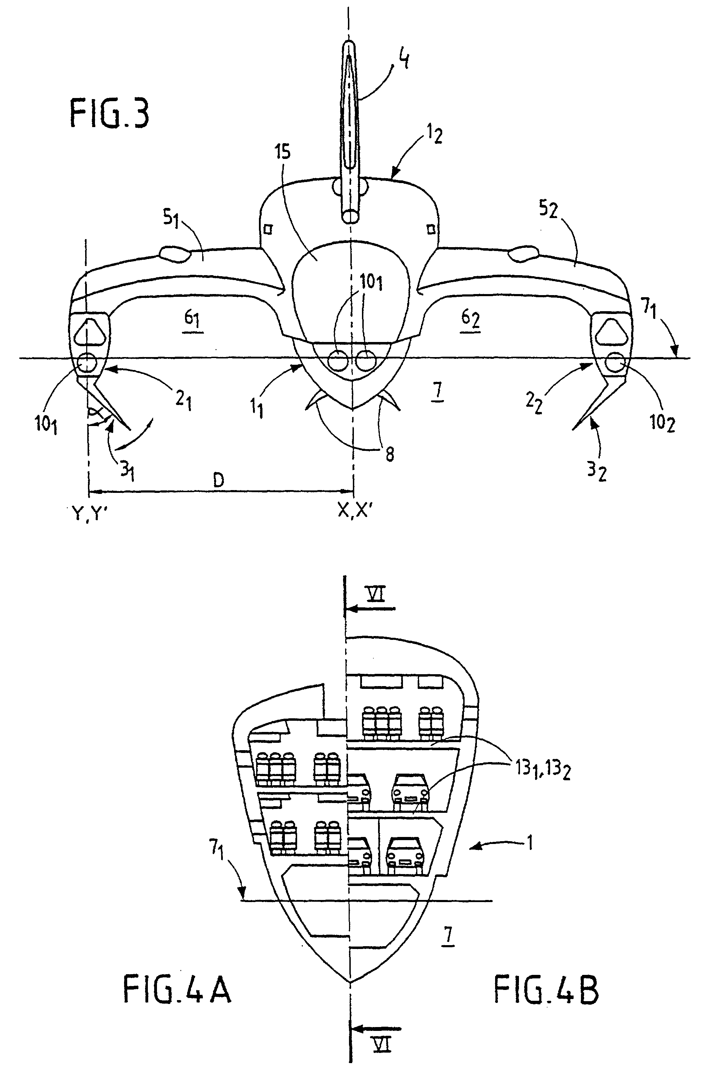

Ces trois flotteurs 1 et 2 restent toujours au moins en partie immergée quelle que soit la vitesse d'avancement dudit navire et grâce aux différents moyens et formes spécifiques suivant l'invention assurent une navigation dans un plan qui reste très proche de l'horizontal ; le flotteur central est aménagé pour recevoir des passagers sur des ponts spécifiques 13₁ à 13₃ et des véhicules sur d'autres ponts 13₂ tels que représentés sur les différentes figures 4 à 6 ; d'autres aménagements sont bien sûr possibles en fonction des dimensions de cette coque centrale et de l'utilisation d'un tel navire. Différents hublots de visibilité 14 sont bien sûr disposés au moins au niveau des ponts 13 où sont installés les passagers. Une passerelle 12 de navigation et de commandement domine l'ensemble de la coque et est de préférence aménagée sur le flotteur central 1₂ légèrement en avant de l'étrave des flotteurs latéraux 2.

Cette coque centrale 1 peut comporter deux quilles latérales 8 fixes sur la partie arrière de sa carène 1₁ et comporte un gouvernail arrière 9 de navigation. En dessous des ponts 13, la structure de la coque centrale 1 comporte un double fond 18 et à l'arrière la machinerie 17 dans laquelle sont situés les groupes motopropulseurs, qui sont comme indiqué ci-dessus des hydrojets d'eau dont les tuyères 10 sont situées à la partie arrière de la coque.

Pour assurer une réserve de flottabilité telle que même en cas de déchirure de la coque provoquant l'envahissement par l'eau de certains volumes de transport et de tout le double fond 18, l'ensemble de la coque puisse rester en flottabilité, tous les volumes de coque non utilisés peuvent être remplis d'une mousse de flottabilité en quantité suffisante pour compenser l'ensemble du poids du navire en charge, tels que : dans le volume avant 19, le volume arrière 20, l'ensemble des volumes 21 disponibles entre les ponts 13 dans le reste de la coque, ainsi que ceux des bras de liaison 5 et des flotteurs latéraux 2, tels que représentés en grisé sur les figures 7 et 8.

L'accès des véhicules aux différents ponts 13₂ s'effectue par une porte arrière 15 de type connu et l'accès des passagers par au moins une porte latérale 16 située sur le flotteur central 1₂ de préférence en avant de l'étrave des flotteurs latéraux 2.

La propulsion par hydrojets est réalisée par quatre propulseurs 10 dont un situé sur chaque flotteur latéral 2 et deux sur la coque centrale 1 avec des entrées d'eau d'alimentation 11 situées vers le milieu de la carène du flotteur considéré afin ne pas trop perturber l'écoulement vers la partie arrière de ladite carène : ainsi de telles bouches d'admission 11 sont de préférence positionnées à une distance comprise entre 10 et 15 % de la valeur de la longueur de la carène de la coque considérée, soit en amont, soit en aval du point de décollement de la couche limite laminaire, et leur longueur d'ouverture doit être de 10 à 15 % de la longueur de cette même couche limite laminaire.

De plus pour faciliter les manoeuvres dans les ports, le flotteur central 1 peut comporter des propulseurs d'étrave rétractables non représentés sur les figures jointes.

Compte tenu des caractéristiques de finesse recherchée pour l'ensemble des flotteurs et leurs dispositions spécifiques suivant l'invention, le rapport du volume de carène immergée du flotteur central 1₁ au volume du parallélépipède circonscrit enveloppant ladite carène, appelé le bloc coefficient, a une valeur comprise entre 0,32 et 0,34 ; en considérant la longueur L_{PP} entre perpendiculaires avant et arrière dudit flotteur et sa largeur au maître bau à la flottaison le rapport entre cette longueur et cette largeur est compris entre 15 et 18 avec une longueur de carène du flotteur central 1 qui peut être comprise entre 50 et 150 m ; ainsi par exemple pour une longueur entre perpendiculaires L_{PP} de 100 m la largeur au maître bau à la flottaison pourrait être de 6 m.

En ce qui concerne la carène des flotteurs latéraux 2 le bloc coefficient ou coefficient de finesse est compris de préférence entre 0,26 et 0,28 avec un rapport de leur longueur sur leur largeur, tel que définis ci-dessus pour le flotteur central entre 13 et 17 ; le rapport de la longueur du flotteur central 1 sur la longueur des flotteurs latéraux 2 est comprise entre 2,5 et 4,5 et de préférence entre 2,85 et 4.

L'arrière des deux flotteurs latéraux 2 est situé à une distance d comprise entre 5 et 20 % de la valeur de la longueur L_{PP} de la carène du flotteur central, en avant par rapport à la perpendiculaire arrière de ce flotteur central 1.

Les plans médians YY' longitudinaux des carènes latérales des flotteurs 2 sont situés à une distance D comprise entre 10 et 15 % de la valeur de la longueur L_{PP} de la carène du flotteur central 1, de part et d'autre du plan médian XX' par celle-ci.

De préférence d est même compris entre 10 et 15 % de L_{PP} et D entre 12 et 14 %.

L'ensemble des valeurs et des fourchettes des dimensions indiquées ci-dessus sont valables pour toute longueur L_{PP} du flotteur central 1 entre perpendiculaires comprise entre 50 et 150 m.

De même pour ces mêmes dimensions de coque la surface de l'empennage 4 est telle que son rapport avec la surface latérale de la partie émergée 1₂ du flotteur central 1 est comprise entre 0,07 et 0,09, et la surface des ailerons, ou "foil", stabilisateurs 3 par rapport à la surface de carène immergée des flotteurs 2 correspondant est comprise entre 0,025 et 0,030.

L'orientation de ces foils ou ailerons 3 et des sorties de tuyères 10, est pilotée par des commandes électriques de stabilisation du navire liées à une centrale inertielle est assurée par exemple par un système hydraulique soutenu par un système pneumatique de secours qui remet au moins les tuyères 10 en position horizontale en cas de problème. Cette double stabilisation croisée entre les foils ou ailerons et les tuyères, liée à la centrale inertielle, permet un confort optimal par le contrôle des mouvements latéraux parasites sachant qu'un tel système est quasi neutre en terme de consommation d'énergie.

Pour donner un ordre de grandeur du déplacement des navires pouvant être réalisés suivant la présente invention, une unité d'une longueur L_{PP} de 62 m a un déplacement lège de l'ordre de 190 tonnes, pour un déplacement à pleine charge de 240 tonnes ; pour une unité de 100 m le déplacement lège pourrait être de 485 tonnes et un déplacement à pleine charge de 680 tonnes et pour une unité de 130 m un déplacement lège de l'ordre de 800 tonnes pour un déplacement à pleine charge de 1200 tonnes.

## Revendications

1. Coque de navire à grande vitesse comportant un flotteur principal central (1) et deux flotteurs latéraux (2) de longueur plus courte, situés vers l'arrière du flotteur central (1, reliés à celui-ci par des bras de liaison (5) et comportant des foils ou ailerons immergés (3), les carènes desdits trois flotteurs (1,2) étant toujours immergées quelle que soit la vitesse, **caractérisée en ce que** le coefficient de finesse des trois carènes est compris entre 0,25 et 0,35 avec un rapport de leur longueur sur leur largeur compris entre 12 et 20 et un rapport de longueur de la carène centrale sur la longueur des carènes latérales entre 2,5 et 4,5, et les bras de liaison (5) sont carénés en forme d'ailes créant deux tuyères (6) à effet de sol entre les surfaces latérales intérieures émergées du flotteur central (1) et des flotteurs latéraux (2), et la surface liquide (7₁), sur laquelle se déplace ladite coque trimaran.

2. Coque suivant la revendication 1, **caractérisée en ce que** le coefficient de finesse de la carène centrale (1) est compris entre 0,32 et 0,34 avec un rapport de longueur sur largeur entre 15 et 18 pour une longueur du flotteur central (1) comprise entre 50 et 150 m.

3. Coque suivant l'une quelconque des revendications 1 ou 2, **caractérisée en ce que** le coefficient de finesse des carènes des flotteurs latéraux (2) est compris entre 0,26 et 0,28 avec un rapport de leur longueur sur leur largeur entre 13 et 17 pour une longueur de carène du flotteur central (1) comprise entre 50 et 150 m.

4. Coque suivant l'une quelconque des revendications 1 à 3, **caractérisée en ce que** l'arrière des deux flotteurs latéraux (2) est située, à une distance d comprise entre 5 et 20 % de la valeur de la longueur de la carène du flotteur central (1), en avant par rapport à la perpendiculaire arrière de celui-ci.

5. Coque suivant l'une quelconque des revendications 1 à 4, **caractérisée en ce que** les plans médians longitudinaux YY' des carènes des flotteurs latéraux (2) sont situés à une distance D comprise entre 10 et 15 % de la valeur de la longueur L_{PP} de la carène du flotteur central (1), de part et d'autre du plan médian XX' de celui-ci.

6. Coque suivant l'une quelconque des revendications 1 à 5, **caractérisée en ce que** lesdits foils ou ailerons immergés sont orientables et aptes à être toujours orientés pour avoir une incidence positive.

7. Coque suivant l'une quelconque des revendications 1 à 6, **caractérisée en ce qu'**elle comporte un empennage vertical aérien arrière (4).

8. Coque suivant l'une quelconque des revendications 1 à 7, **caractérisée en ce qu'**elle comporte un moyen de propulsion par au moins un jet d'eau (10) sortant de la partie arrière du flotteur central (1).

9. Coque suivant la revendication 8, **caractérisée en ce qu'**elle comporte au moins quatre propulseurs par jets d'eau (10) dont un sur chaque flotteur latéral (2) et deux sur le flotteur central (1).

10. Coque suivant l'une quelconque des revendications 8 à 9, **caractérisée en ce que** les entrées d'eau (11) de la propulsion par jet d'eau (10) sont situés vers le milieu de la carène du flotteur considéré.

## Patentansprüche

1. Schiffsrumpf eines Hochgeschwindigkeitsschiffs mit einem mittleren Hauptschwimmkörper (1) und zwei kürzeren seitlichen Schwimmkörpern (2), die im hinteren Bereich des mittleren Schwimmkörpers (1) angeordnet und mit diesem durch Verbindungsarme (5) verbunden sind und eingetauchte Tragflügel (3) aufweisen, wobei die Unterwasserschiffe dieser drei Schwimmkörper (1,2) ungeachtet der Geschwindigkeit stets eingetaucht sind, **dadurch gekennzeichnet, daß** der Völligkeitsgrad der drei Unterwasserschiffe zwischen 0,25 und 0,35 liegt mit einem Verhältnis von Länge zu Breite zwischen 12 und 20 und einem Verhältnis der Länge des mittleren Unterwasserschiffs zur Länge der seitlichen Unterwasserschiffe zwischen 2,5 und 4,5 und daß die Verbindungsarme (5) stromlinienförmig in Form von Flügeln ausgeführt sind, die zwei Düsen (6) mit Bodeneffekt zwischen den aus dem Wasser ragenden inneren Seitenflächen des mittleren Schwimmkörpers (1) und der seitlichen Schwimmkörper (2) und der Wasserfläche (7₁) erzeugen, auf der sich dieser Trimaran-Schiffsrumpf bewegt.

2. Schiffsrumpf nach Anspruch 1,
**dadurch gekennzeichnet, daß** der Völligkeitsgrad des mittleren Unterwasserschiffs (1) zwischen 0,32 und 0,34 liegt mit einem Verhältnis von Länge zu Breite zwischen 15 und 18 bei einer Länge des mittleren Schwimmkörpers (1) zwischen 50 und 150 m.

3. Schiffsrumpf nach einem der Ansprüche 1 oder 2,
**dadurch gekennzeichnet, daß** der Völligkeitsgrad der Unterwasserschiffe der seitlichen Schwimmkörper (2) zwischen 0,26 und 0,28 liegt mit einem Verhältnis von Länge zu Breite zwischen 13 und 17 bei einer Länge des mittleren Schwimmkörpers (1) zwischen 50 und 150 m.

4. Schiffsrumpf nach einem der Ansprüche 1 bis 3,
**dadurch gekennzeichnet, daß** der hintere Teil der zwei seitlichen Schwimmkörper (2) mit einem Abstand d von 5 bis 20 % des Längenmaßes des Unterwasserschiffes des mittleren Schwimmkörpers (1) in Bezug zu dessen hinterer Senkrechten nach vorne verlagert ist.

5. Schiffsrumpf nach einem der Ansprüche 1 bis 4,
**dadurch gekennzeichnet, daß** die längsverlaufenden Mittelebenen YY' der Unterwasserschiffe der seitlichen Schwimmkörper (2) mit einem Abstand D von 10 bis 15 % des Längenmaßes Lₚₚ des Unterwasserschiffs des mittleren Schwimmkörpers (1) auf je einer Seite von dessen Mittelebene XX' liegen.

6. Schiffsrumpf nach einem der Ansprüche 1 bis 5,
**dadurch gekennzeichnet, daß** die eingetauchten Tragflügel schwenkbar sind und stets so ausgerichtet werden können, daß sie einen positiven Anstellwinkel aufweisen.

7. Schiffsrumpf nach einem der Ansprüche 1 bis 6,
**dadurch gekennzeichnet, daß** er hinten ein über dem Wasser liegendes Seitenleitwerk (4) umfaßt.

8. Schiffsrumpf nach einem der Ansprüche 1 bis 7,
**dadurch gekennzeichnet, daß** er einen Antrieb mit wenigstens einem Wasserstrahl (10) umfaßt, der aus dem hinteren Teil des mittleren Schwimmkörpers (1) austritt.

9. Schiffsrumpf nach Ansprüche 8,
**dadurch gekennzeichnet, daß** er wenigstens vier Wasserstrahlantriebe (10) umfaßt, wobei sich jeweils einer an jedem seitlichen Schwimmkörper (2) und zwei am mittleren Schwimmkörper (1) befinden.

10. Schiffsrumpf nach einem der Ansprüche 8 bis 9,
**dadurch gekennzeichnet, daß** die Wasserzuläufe (11) des Wasserstrahlantriebs (10) ungefähr in der Mitte des Unterwasserschiffes des jeweiligen Schwimmkörpers liegen.

## Claims

1. A hull for a high-speed vessel, the hull comprising a central main float (1) and two side floats (2) of shorter length situated towards the stern of the central float (1), connected thereto by link arms (5), and including underwater foils (3), the underwater portions of said three floats (1, 2) remaining under water at all speeds, the hull being **characterized in that** the fineness coefficients of the three floats lies in the range 0.25 to 0.35 with a ratio of length over beam lying in the range 12 to 20 and a ratio of central float length to side float length in the range 2.5 to 4.5, and the link arms (5) are faired in the form of wings creating two ground-effect nozzles (6) between the abovewater side surfaces of the central float (1) on the inside, the side floats (2), and the surface of the liquid (7₁) on which said trimaran hull is moving.

2. A hull according to claim 1, **characterized in that** the fineness coefficient of the central float (1) lies in the range 0.32 to 0.34 with a length over beam ratio lying in the range 15 to 18 for a central float (1) having a length lying in the range 50 m to 150 m.

3. A hull according to claim 1 or 2, **characterized in that** the fineness coefficient of the side floats (2) lies in the range 0.26 to 0.28 with a ratio of length over beam lying in the range 13 to 17 for a waterline length of the central float (1) lying in the range 50 m to 150 m.

4. A hull according to any one of claims 1 to 3, **characterized in that** the stems of the two side floats (2) are situated at a distance d forward of the perpendicular to the stem of the central float (1) where d lies in the range 5% to 20% of the waterline length of the central float (1).

5. A hull according to any one of claims 1 to 4, **characterized in that** the longitudinal midplanes YY' of the side floats (2) are situated at a distance D on either side of the midplane XX' of the central float (1), where D lies in the range 10% to 15% of the waterline length L_{PP} of the central float (1).

6. A hull according to any one of claims 1 to 5, **characterized in that** said underwater foils are tiltable and suitable for being tilted so as to have an angle of incidence that is positive at all times.

7. A hull according to any one of claims 1 to 6, **characterized in that** it includes a vertical tail fin (4) in the air at its stem.

8. A hull according to any one of claims 1 to 7, **characterized in that** it includes propulsion means using at least one waterjet (10) exiting from the stem portion of the central float (1).

9. A hull according to claim 8, **characterized in that** it has at least four waterjet thrusters (10), one on each side float (2) and two on the central float (1).

10. A hull according to claim 8 or 9, **characterized in that** the water inlets (11) for waterjet propulsion (10) are situated towards the middles of the underwater portions of the floats in question.
